# EUROPEAN PATENT APPLICATION

(11) **EP 3 739 874 A1**
(43) Date of publication of application: **18.11.2020**
(21) Application number: 19738554.5
(22) Date of filing: 10.01.2019
(51) Int. Cl.: H04N 5/76, H04L 29/06

(54) **VIDEO PLAYBACK METHOD AND DEVICE, TERMINAL DEVICE AND COMPUTER READABLE STORAGE MEDIUM**

(30) Priority: 10.01.2018 CN 201810022808
(71) Applicant: ZTE Corporation, Shenzhen, Guangdong 518057 (CN)
(72) Inventor: ZHANG, Hui, Shenzhen, Guangdong 518057 (CN); LUO, Zhiyun, Shenzhen, Guangdong 518057 (CN); ZENG, Yi, Shenzhen, Guangdong 518057 (CN); LIU, Keyang, Shenzhen, Guangdong 518057 (CN); HU, Chong, Shenzhen, Guangdong 518057 (CN)
(74) Representative: Aipex B.V.
(86) International application number: PCT/CN2019/071170
(87) International publication number: WO 2019/137437

(57) **Abstract**

Disclosed are a video playback method and device, a terminal device and a computer readable storage medium. The video playback method is applicable to the terminal device configured to operate a first operating system having an audio and video hardware acceleration function and a second operating system that does not have the audio and video hardware acceleration function. The method includes in the case where a player of the second operating system receives a playback starting instruction of a video file, transmitting the playback starting instruction and display area information of the player to the first operating system based on the second operating system; in the case where the first operating system receives the playback starting instruction, performing, based on the first operating system, audio and video hardware decoding on the video file indicated by the playback starting instruction; and outputting, based on the first operating system, decoded image data in a display area indicated by the display area information and decoded audio data through a speaker.

## Description

### TECHNICAL FIELD

The present disclosure relates to, but is not limited to, the technical field of intelligent terminals and, in particular, to a video playback method and device, a terminal device and a computer readable storage medium.

### BACKGROUND

Audio and video hardware acceleration is the core technology of chip manufacturers. In normal circumstances, codes for audio and video hardware acceleration are not open-source, but are converted into a binary file and then provided to users. Binary files include, but are not limited to, dynamic libraries, static libraries and firmware. However, these binary files are compiled based on a particular operating system and a particular system version and cannot work properly on other operating systems or other system versions. If the operating system of a terminal device does not support audio and video hardware acceleration, the terminal device extremely consumes CPU resources when playing a high-definition video and the played picture may even freeze, thereby affecting the playing effect.

### SUMMARY

The primary object of the present disclosure is to provide a video playback method and device, a terminal device and a computer readable storage medium.

To achieve the preceding object, an embodiment of the present disclosure provides a video playback method, which is applicable to the terminal device configured to operate a first operating system having an audio and video hardware acceleration function and a second operating system that does not have the audio and video hardware acceleration function. The video playback method includes in the case where a player of the second operating system receives a playback starting instruction of a video file, transmitting the playback starting instruction and display area information of the player to the first operating system based on the second operating system; in the case where the first operating system receives the playback starting instruction, performing, based on the first operating system, audio and video hardware decoding on the video file indicated by the playback starting instruction; and outputting, based on the first operating system, decoded image data in a display area indicated by the display area information and decoded audio data through a speaker.

An embodiment of the present disclosure further provides a video playback device, which is applicable to the terminal device. The terminal device is configured to operate a first operating system having an audio and video hardware acceleration function and a second operating system that does not have the audio and video hardware acceleration function. The video playback device includes a transmission module, a decoding module and a playback module. The transmission module is configured to, in the case where a player of the second operating system receives a playback starting instruction of a video file, transmit the playback starting instruction and display area information of the player to the first operating system based on the second operating system. The decoding module is configured to, in the case where the first operating system receives the playback starting instruction, perform, based on the first operating system, audio and video hardware decoding on the video file indicated by the playback starting instruction. The playback module is configured to output, based on the first operating system, decoded image data in a display area indicated by the display area information and decoded audio data through a speaker.

An embodiment of the present disclosure further provides a terminal device. The terminal device includes a memory and a processor. The memory stores a first operating system, a second operating system and a video playback program. The first operating system has an audio and video hardware acceleration function. The second operating system does not have the audio and video hardware acceleration function. The processor is configured to operate the first operating system and the second operating system and is configured to execute the video playback program to perform the following steps: in the case where a player of the second operating system receives a playback starting instruction of a video file, transmitting the playback starting instruction and display area information of the player to the first operating system based on the second operating system; in the case where the first operating system receives the playback starting instruction, performing, based on the first operating system, audio and video hardware decoding on the video file indicated by the playback starting instruction; and outputting, based on the first operating system, decoded image data in a display area indicated by the display area information and decoded audio data through a speaker.

An embodiment of the present disclosure further provides a computer readable storage medium, which is applicable to the terminal device. The terminal device is configured to operate a first operating system having an audio and video hardware acceleration function and a second operating system that does not have the audio and video hardware acceleration function. The computer readable storage medium stores a video playback program which, when executed by a processor, performs the following steps: in the case where a player of the second operating system receives a playback starting instruction of a video file, transmitting the playback starting instruction and display area information of the player to the first operating system based on the second operating system; in the case where the first operating system receives the playback starting instruction, performing, based on the first operating system, audio and video hardware decoding on the video file indicated by the playback starting instruction; and outputting, based on the first operating system, decoded image data in a display area indicated by the display area information and decoded audio data through a speaker.

### BRIEF DESCRIPTION OF DRAWINGS

FIG. 1 is a schematic diagram illustrating the hardware structure of a terminal device according to the present disclosure;
FIG. 2 is a flowchart of a video playback method according to an embodiment of the present disclosure;
FIG. 3 is a schematic diagram illustrating the sharing mechanism of the audio and video hardware acceleration function of a video playback method according to an embodiment of the present disclosure; and
FIG. 4 is a schematic diagram of a video playback device according to an embodiment of the present disclosure.

### DETAILED DESCRIPTION

It is to be understood that the embodiments described herein are intended to explain the present disclosure and not to limit the present disclosure.

The main solution according to embodiments of the present disclosure is based on a terminal device configured to operate a first operating system having an audio and video hardware acceleration function and a second operating system that does not have the audio and video hardware acceleration function simultaneously, in the case where a player of the second operating system receives a playback starting instruction of a video file, transmitting the playback starting instruction and display area information of the player to the first operating system based on the second operating system; then in the case where the first operating system receives the playback starting instruction, performing, based on the first operating system, audio and video hardware decoding on the video file indicated by the playback starting instruction; and outputting, based on the first operating system, decoded image data in a display area indicated by the display area information and outputting decoded audio data through a speaker. In this manner, in the case where the operating system that does not have the audio and video hardware acceleration function plays a video file, the operating system having the audio and video hardware acceleration function can be used to perform the audio and video hardware acceleration on the video file and complete playing so that the purpose of improving the playing effect of the operating system that does not have the audio and video hardware acceleration function is achieved.

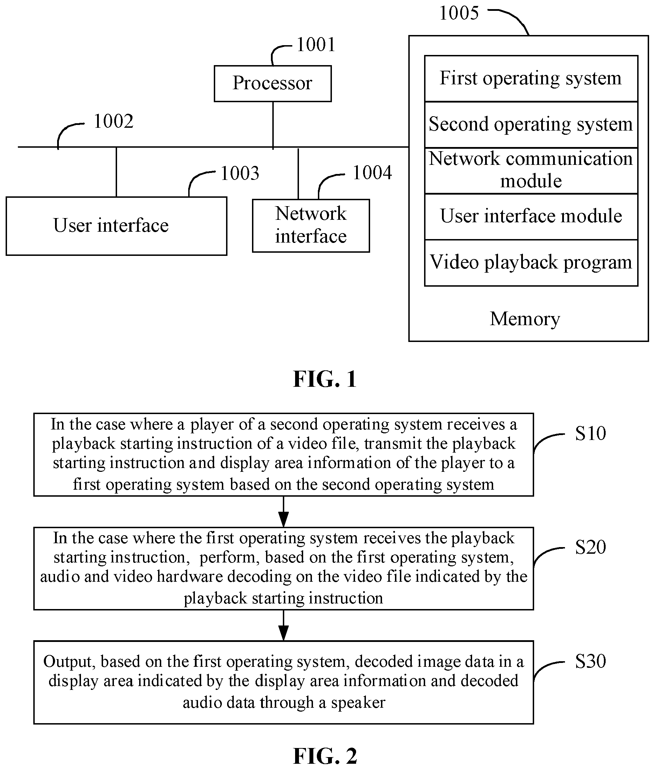

As shown in FIG. 1, FIG. 1 is a schematic diagram illustrating the hardware structure of a terminal device according to an embodiment of the present disclosure.

As shown in FIG. 1, the terminal device may include a processor 1001, a communication bus 1002, a user interface 1003, a network interface 1004 and a memory 1005. The communication bus 1002 is configured to achieve a communication connection between these components. The user interface 1003 may include a display, a speaker and an input unit such as a keyboard. Optionally, the user interface 1003 may include a standard wired interface and a standard wireless interface. Optionally, the network interface 1004 may include a standard wired interface and a standard wireless interface (such as a Wi-Fi interface). The memory 1005 may be a high-speed RAM, or may be a non-volatile memory such as a disk memory. Optionally, the memory 1005 may be a storage device independent of the preceding processor 1001.

It is to be understood by those skilled in the art that the structure of the terminal device illustrated in FIG. 1 does not limit the terminal device, and the terminal device may include more or fewer components than those illustrated, may include a combination of some components, or may have a different component arrangement.

As shown in FIG. 1, in the terminal device in an embodiment of the present disclosure, as a computer readable storage medium, the memory 1005 may include a first operating system having an audio and video hardware acceleration function, a second operating system that does not have the audio and video hardware acceleration function, a network communication module, a user interface module and a video playback program.

In the terminal device shown in FIG. 1, the network interface 1004 is mainly configured to connect a background server and perform data communication with the background server; the user interface 1003 is mainly configured to connect a client (user terminal) and perform data communication with the client; and the processor 1001 is configured to operate the first operating system and the second operating system and may be configured to call the video playback program stored in the memory 1005 and perform the operations described below.

In the case where a player of the second operating system receives a playback starting instruction of a video file, the playback starting instruction and display area information of the player are transmitted to the first operating system based on the second operating system.

In the case where the first operating system receives the playback starting instruction, based on the first operating system, audio and video hardware decoding is performed on the video file indicated by the playback starting instruction.

Based on the first operating system, decoded image data is output in a display area indicated by the display area information and decoded audio data is output through a speaker.

Further, the processor 1001 may be configured to call the video playback program stored in the memory 1005 and perform the operations described below.

In the case where a change in the display area of the player is detected based on the second operating system, the changed display area information is transmitted to the first operating system based on the second operating system.

Based on the first operating system, the decoded image data is output in the display area indicated by the changed display area information.

Further, the processor 1001 may be configured to call the video playback program stored in the memory 1005 and perform the operations described below.

Playback state information of the video file is returned to the second operating system based on the first operating system.

The playback state information is displayed in the player based on the second operating system.

Further, the processor 1001 may be configured to call the video playback program stored in the memory 1005 and perform the operation described below.

In the case where a playback control instruction other than the playback starting instruction is received based on the player, based on the second operating system, the received playback control instruction is transmitted to the first operating system for responses.

Further, the first operating system includes a first multimedia system, the second operating system includes a second multimedia system, and the processor 1001 may be configured to call the video playback program stored in the memory 1005 and perform the operations described below.

A multimedia system proxy server is established based on the first multimedia system and a multimedia system proxy client is established based on the second multimedia system.

A communication connection is established between the multimedia system proxy server and the multimedia system proxy client so that data transmission between the first operating system and the second operating system is performed based on the communication connection.

Further, the first operating system further includes an audio hardware acceleration system and a video hardware acceleration system. The processor 1001 may be configured to call the video playback program stored in the memory 1005 and perform the operations described below.

The audio part of the video file is input into the audio hardware acceleration system based on the first multimedia system so that the audio data decoded and returned by the audio hardware acceleration system is obtained.

The video part of the video file is input into the video hardware acceleration system based on the first multimedia system so that the image data decoded and returned by the video hardware acceleration system is obtained.

Further, an embodiment of the present disclosure further provides a video playback method, which is applicable to the terminal device shown in FIG. 1. As shown in FIG. 2, the video playback method according to an embodiment of the present disclosure includes the steps described below.

In step S 10, in the case where a player of a second operating system receives a playback starting instruction of a video file, the playback starting instruction and display area information of the player are transmitted to a first operating system based on the second operating system.

In step S20, in the case where the first operating system receives the playback starting instruction, based on the first operating system, audio and video hardware decoding is performed on the video file indicated by the playback starting instruction.

In step S30, based on the first operating system, decoded image data is output in a display area indicated by the display area information and decoded audio data is output through a speaker.

To facilitate understanding of the solution of the present disclosure, the sharing mechanism of an audio and video hardware acceleration function based on which the solution of the present disclosure is implemented is described below firstly.

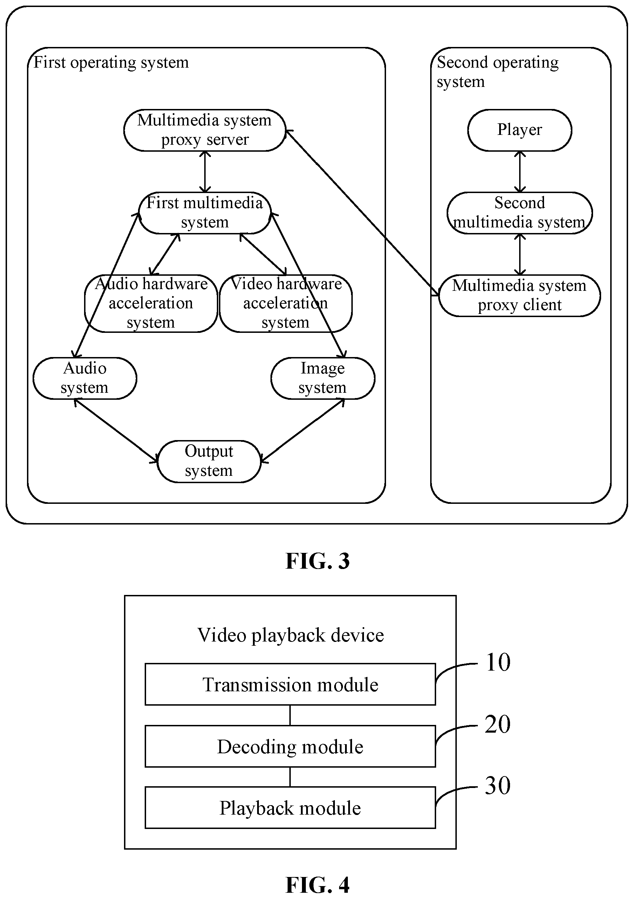

Referring to FIG. 3, the processor 1001 may operate a first operating system and a second operating system simultaneously.

The first operating system is a provider of the audio and video hardware acceleration function and is configured to carry an output system, an audio system, an image system, an audio hardware acceleration system, a video hardware acceleration system, a first multimedia system and a multimedia system proxy server. The output system is connected to the audio system and the image system, is configured to play audio and display images and includes a speaker, a display or other output equipment.

The audio system is connected to the first multimedia system and is configured to process audio data submitted by the first multimedia system and transmit the processed audio data to the output system.

The image system is connected to the first multimedia system and is configured to process image data submitted by the first multimedia system and transmit the processed image data to the output system.

The audio hardware acceleration system is connected to the first multimedia system and is configured to accelerate audio data decoding and transmit the decoded audio data to the first multimedia system.

The video hardware acceleration system is connected to the first multimedia system and is configured to accelerate image data decoding and transmit the decoded image data to the first multimedia system.

The first multimedia system is connected to the multimedia system proxy server and is configured to process a request submitted by the multimedia system proxy server.

The multimedia system proxy server is connected to a multimedia system proxy client and is configured to process a request submitted by the multimedia system proxy client.

The second operating system is a user of the audio and video hardware acceleration function and is configured to carry the multimedia system proxy client, a second multimedia system and a player.

The multimedia system proxy client is connected to the second multimedia system and is configured to process a request submitted by the second multimedia system.

The second multimedia is connected to a player and is configured to process a request submitted by the multimedia player.

The player is configured to provide a playback control interface on which users operate. The playback control interface may include controls such as playback, pausing and stopping.

Based on the description of the architecture of the sharing mechanism of the audio and video hardware acceleration function, the implementation of the solution of the present disclosure is described below.

In an embodiment of the present disclosure, to achieve data transmission between the second operating system and the first operating system, before step S10, the method further includes the steps for establishing a transmission channel described below.

A multimedia system proxy server is established based on the first multimedia system and a multimedia system proxy client is established based on the second multimedia system.

A communication connection is established between the multimedia system proxy server and the multimedia system proxy client so that data transmission between the first operating system and the second operating system is performed based on the communication connection.

In specific implementation, after the first operating system starts the audio system, the audio hardware acceleration system, the image system and the video hardware acceleration system, the terminal device starts the first multimedia system. After starting the first multimedia system, based on the first multimedia system, the terminal device establishes a multimedia system proxy server and monitors a connection request of a multimedia system proxy client through the multimedia system proxy server.

On the other hand, after the second operating system starts the second multimedia system, the terminal device establishes the multimedia system proxy client based on the second multimedia system. After the preceding operations, the terminal device monitors whether the multimedia system proxy server is ready based on the multimedia system proxy client. In the case where the multimedia system proxy server is ready, in this case, the terminal device establishes a communication connection between the multimedia system proxy server and the multimedia system proxy client.

Heretofore, a transmission channel between the first operating system and the second operating system is established. The first operating system may share the audio and video hardware acceleration function with the second operating system through the transmission channel.

In the present embodiment, the terminal device executes the second operating system at the foreground and starts the player according to the user operation and based on the second operating system. After the preceding operations, based on the started player, the terminal device may receive the playback control instruction from the user. On the other hand, according to the actual requirements of the user, the user inputs the corresponding playback control instruction. It is to be noted that the present disclosure does not specifically limit how to input the playback control instruction. For example, the user can directly input the corresponding playback control instruction through the controls such as playback, pausing and stopping provided by the playback control interface of the player and the operation menu. As another example, in the case where the user needs to play a certain video file, the user may directly drag the video file to be played into the display area of the player, or may trigger a playback starting instruction indicating starting of the playback of the video file by double-clicking the video file to be played.

In the case where the player receives the playback starting instruction of the video file, the terminal device transmits the playback starting instruction and display area information of the player to the first operating system based on the second operating system. The display area information at least includes parameters such as left, top, right and bottom. These parameters are used for specifically limiting the position of the display area of the player on the screen of the terminal device.

In the case where the playback starting instruction and the display area information are transmitted, referring to FIG. 3, the playback starting instruction and the display area display received by the player are transmitted to the second multimedia system firstly, and then the playback starting instruction and the display area information are transmitted to the first multimedia system through the transmission channel between the multimedia system proxy client and the multimedia system proxy server, so that the transmission of the playback starting instruction and the display area display from the second operating system to the first operating system is achieved.

In the present embodiment, in the case where the first operating system receives the playback starting instruction, based on the first operating system, audio and video hardware decoding is performed on the video file indicated by the playback starting instruction.

The audio part of the video file is input into the audio hardware acceleration system based on the first multimedia system so that the audio data decoded and returned by the audio hardware acceleration system is obtained.

The video part of the video file is input into the video hardware acceleration system based on the first multimedia system so that the image data decoded and returned by the video hardware acceleration system is obtained.

In the present embodiment, in the case where the first multimedia system receives the playback starting instruction, based on the first multimedia system, the terminal device inputs the audio part of the video file indicated by the playback starting instruction into the audio hardware acceleration system, and then the audio hardware acceleration system calls the audio hardware (such as a sound card) of the terminal device, performs audio hardware decoding, and returns decoded audio data to the first multimedia system. Meanwhile, based on the first multimedia system, the terminal device inputs the video part of the video file indicated by the playback starting instruction into the video hardware acceleration system, and then the video hardware acceleration system calls the video hardware (such as a display card) of the terminal device, performs video hardware decoding, and returns decoded video data to the first multimedia system. Heretofore, the audio and video hardware decoding of the video file to be played is completed.

The step in which after the audio and video hardware decoding of the video file is completed, based on the first operating system, the terminal device outputs the decoded image data in the display area indicated by the display area information and outputs the decoded audio data through a speaker includes the step described below.

The decoded audio data is transmitted to an audio system based on the first multimedia system and the audio system outputs the decoded audio data through the speaker of an output system. Meanwhile, the decoded image data is transmitted to an image system based on the first multimedia system and the image system outputs the decoded image data through the display of the output system. Specifically, outputting in the display area corresponding to the display area information in the display is outputting in the display area of the player. For users, the terminal device plays the video file through the player of the second operating system. That is, the audio and video hardware decoding and playback of the video file is achieved through the operating system that does not have the audio and video hardware acceleration function.

In the video playback method according to embodiments of the present disclosure, based on a terminal device configured to operate a first operating system having an audio and video hardware acceleration function and a second operating system that does not have the audio and video hardware acceleration function, in the case where a player of the second operating system receives a playback starting instruction of a video file, the playback starting instruction and display area information of the player are transmitted to the first operating system based on the second operating system; then in the case where the first operating system receives the playback starting instruction, based on the first operating system, audio and video hardware decoding is performed on the video file indicated by the playback starting instruction; and based on the first operating system, decoded image data is output in a display area indicated by the display area information and decoded audio data is output through a speaker. In this manner, in the case where the operating system that does not have the audio and video hardware acceleration function plays a video file, the operating system having the audio and video hardware acceleration function can be used to perform the audio and video hardware acceleration on the video file and complete playing so that the purpose of improving the playing effect of the operating system that does not have the audio and video hardware acceleration function is achieved.

Further, according to an embodiment of the present disclosure, after step S30, the video playback method further includes the steps described below.

In the case where a change in the display area of the player is detected based on the second operating system, the changed display area information is transmitted to the first operating system based on the second operating system.

Based on the first operating system, the decoded image data is output in the display area indicated by the changed display area information.

It is to be noted that in the actual use, the user usually adjusts the display area of the player according to the actual requirements of the user. For example, the user switches between window playback and full-screen playback of the player, drags the display position of the player at will in the case where the window playback is performed, and zooms in or zooms out the size of the player. Correspondingly, these operations cause the change of the display area of the player. To handle the change, in the present embodiment, an update operation of the display area of the player is added.

In the present embodiment, based on the second operating system, the terminal device detects whether the display area of the player changes in real time. The changes include, but are not limited to, the position change of the display area and the zooming-in or zooming-out of the size of the display area. Specifically, whether the display area of the player changes is detected through the second multimedia system.

In the case where a change in the display area of the player is detected, based on the second operating system, the terminal device transmits the changed display area information to the first operating system. Specifically, based on the second multimedia system and the transmission channel between the multimedia system proxy client and the multimedia system proxy server, the changed display area information is transmitted to the first multimedia system of the first operating system.

In the case where the first multimedia system receives the changed display area information, the terminal device transmits the changed display area information to an image system based on the first multimedia system, and then the image system outputs the decoded image data in the display area indicated by the changed display area information. As a result, no matter how the display area of the player changes, the output image data is always applicable to the display area of the player.

Further, according to an embodiment of the present disclosure, after step S30, the video playback method further includes the steps described below.

Playback state information of the video file is returned to the second operating system based on the first operating system.

The playback state information is displayed in the player based on the second operating system.

It is to be noted that to facilitate the user's understanding of the playback state of the video file, a display operation of the playback state information is added in the present embodiment.

In the present embodiment, because the actual player of the video file is the first multimedia system of the first operating system, the terminal device firstly obtains the playback state information of the video file based on the first multimedia system. The playback state information includes, but is not limited to, information about a playback progress, a volume level, stopping, buffering, pausing, playback and finishing.

After the playback state information of the video file is obtained, based on the first multimedia system, the terminal device transmits the obtained playback state information to the second multimedia system through the transmission channel between the multimedia system proxy client and the multimedia system proxy server.

After the second multimedia system receives the playback state information of the video file, based on the second multimedia system, the terminal device displays the playback state information of the video file in the player so that the user can check the playback state information of the video file.

Further, according to an embodiment of the present disclosure, after step S30, the video playback method further includes the step described below.

In the case where a playback control instruction other than the playback starting instruction is received based on the player, based on the second operating system, the received playback control instruction is transmitted to the first operating system for responses.

It is readily understood that in the actual use, after the user operates the player so that the player starts to play a video file, the user can control the playback of the player according to the actual requirements of the user. The requirements of the user include, but are limited to, pausing, stopping, adjusting the playback progress and adjusting the volume level. Correspondingly, to satisfy the playback control requirements of the user in embodiments of the present disclosure, a response operation of a playback control instruction other than the playback starting instruction is added in the present embodiment.

In the present embodiment, in the case where a playback control instruction other than the playback starting instruction is received based on the player, the terminal device transmits the received playback control instruction to the second multimedia system. In the case where the second multimedia system receives the playback control instruction, based on the second multimedia system, the playback control instruction is transmitted to the first multimedia system through the transmission channel between the multimedia system proxy client and the multimedia system proxy server, and the first multimedia system makes responses. For example, in the case where the received playback control instruction is a playback stopping instruction, the first multimedia system stops decoding and outputting the video file so that the playback is stopped.

Further, an embodiment of the present disclosure further provides a video playback device, which is applicable to the terminal device shown in FIG. 1. Referring to FIG. 4, the video playback device according to the present embodiment includes a transmission module 10, a decoding module 20 and a playback module 30.

The transmission module 10 is configured to, in the case where a player of a second operating system receives a playback starting instruction of a video file, transmit the playback starting instruction and display area information of the player to a first operating system based on the second operating system.

The decoding module 20 is configured to, in the case where the first operating system receives the playback starting instruction, perform, based on the first operating system, audio and video hardware decoding on the video file indicated by the playback starting instruction.

The playback module 30 is configured to, output, based on the first operating system, decoded image data in a display area indicated by the display area information and decoded audio data through a speaker.

Optionally, in an embodiment, the transmission module 10 is further configured to, in the case where a change in the display area of the player is detected based on the second operating system, transmit the changed display area information to the first operating system based on the second operating system; and the playback module 30 is further configured to output, based on the first operating system, the decoded image data in the display area indicated by the changed display area information.

Optionally, in an embodiment, the transmission module 10 is further configured to return playback state information of the video file to the second operating system based on the first operating system; and the playback module 30 is further configured to display the playback state information in the player based on the second operating system.

Optionally, in an embodiment, the transmission module 10 is further configured to, in the case where a playback control instruction other than the playback starting instruction is received based on the player transmit, based on the second operating system, the received playback control instruction to the first operating system for responses.

Optionally, in an embodiment, the first operating system includes a first multimedia system, the second operating system includes a second multimedia system, and the video playback device further includes a connection module (not shown in FIG. 4), which is configured to establish a multimedia system proxy server based on the first multimedia system and establish a multimedia system proxy client based on the second multimedia system; and establish a communication connection between the multimedia system proxy server and the multimedia system proxy client so that data transmission between the first operating system and the second operating system is established based on the communication connection.

Optionally, in an embodiment, the first operating system further includes an audio hardware acceleration system and a video hardware acceleration system, and the decoding module 20 is further configured to input an audio part of the video file into the audio hardware acceleration system based on the first multimedia system and obtain the audio data decoded and returned by the audio hardware acceleration system; and input a video part of the video file into the video hardware acceleration system based on the first multimedia system and obtain the image data decoded and returned by the video hardware acceleration system.

Further, an embodiment of the present disclosure further provides a computer readable storage medium, which is applicable to a terminal device configured to operate a first operating system having an audio and video hardware acceleration function and a second operating system that does not have the audio and video hardware acceleration function. In an embodiment, the computer readable storage medium stores a video playback program which, when executed by a processor 1001, performs the operations described below.

In the case where a player of the second operating system receives a playback starting instruction of a video file, the playback starting instruction and display area information of the player are transmitted to the first operating system based on the second operating system.

In the case where the first operating system receives the playback starting instruction, based on the first operating system, audio and video hardware decoding is performed on the video file indicated by the playback starting instruction.

Based on the first operating system, decoded image data is output in a display area indicated by the display area information and decoded audio data is output through a speaker.

Further, when executed by the processor 1001, the preceding video playback program performs the operations described below.

In the case where a change in the display area of the player is detected based on the second operating system, the changed display area information is transmitted to the first operating system based on the second operating system.

Based on the first operating system, the decoded image data is output in the display area indicated by the changed display area information.

Further, when executed by the processor 1001, the preceding video playback program performs the operations described below.

Playback state information of the video file is returned to the second operating system based on the first operating system.

The playback state information is displayed in the player based on the second operating system.

Further, when executed by the processor 1001, the preceding video playback program further performs the operations described below.

In the case where a playback control instruction other than the playback starting instruction is received based on the player, based on the second operating system, the received playback control instruction is transmitted to the first operating system for responses.

Further, the first operating system includes a first multimedia system, the second operating system includes a second multimedia system, and when executed by the processor 1001, the preceding video playback program further performs the operations described below.

A multimedia system proxy server is established based on the first multimedia system and a multimedia system proxy client is established based on the second multimedia system.

A communication connection is established between the multimedia system proxy server and the multimedia system proxy client so that data transmission between the first operating system and the second operating system is performed based on the communication connection.

Further, the first operating system further includes an audio hardware acceleration system and a video hardware acceleration system and when executed by the processor 1001, the preceding video playback program further performs the operations described below.

The audio part of the video file is input into the audio hardware acceleration system based on the first multimedia system so that the audio data decoded and returned by the audio hardware acceleration system is obtained.

The video part of the video file is input into the video hardware acceleration system based on the first multimedia system so that the image data decoded and returned by the video hardware acceleration system is obtained.

It is to be noted that as used herein, the term "comprising", "including" or any other variant thereof is intended to encompass a non-exclusive inclusion so that a process, method, article or apparatus that includes a series of elements not only includes these elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

The serial numbers of the preceding embodiments of the present disclosure are for purposes of illustration only and do not indicate superiority and inferiority of the embodiments.

From the description of the preceding embodiments, it will be apparent to those skilled in the art that the method in the preceding embodiments may be implemented by software plus a necessary generic hardware platform or may of course be implemented by hardware. However, in many cases, the former is a preferred implementation. Based on this understanding, the solution provided by the present disclosure substantially, or the part contributing to the related art, may be embodied in the form of a software product. The computer software product is stored in a storage medium (such as a read-only memory (ROM)/random-access memory (RAM), a magnetic disk or an optical disk) as described above and includes several instructions for enabling a terminal device (such as a mobile phone, a computer or a tablet computer) to execute the method according to each corresponding embodiment of the present disclosure.

Embodiments of the present disclosure are described above in conjunction with the drawings, but the present disclosure is not limited to the preceding implementations. The preceding implementations are merely illustrative and not limiting. In light of the present disclosure, without departing from the spirit of the present disclosure and the scope of the claims, a person of ordinary skill in the art can make many forms, all of which fall within the scope of the present disclosure.

## Claims

1. A video playback method, which is applicable to a terminal device configured to operate a first operating system having an audio and video hardware acceleration function and a second operating system that does not have the audio and video hardware acceleration function, the method comprising:
in a case where a player of the second operating system receives a playback starting instruction of a video file, transmitting the playback starting instruction and display area information of the player to the first operating system based on the second operating system;
in a case where the first operating system receives the playback starting instruction, performing, based on the first operating system, audio and video hardware decoding on the video file indicated by the playback starting instruction; and
outputting, based on the first operating system, decoded image data in a display area indicated by the display area information and decoded audio data through a speaker.

2. The video playback method of claim 1, wherein after outputting, based on the first operating system, the decoded image data in the display area indicated by the display area information and the decoded audio data through the speaker, the method further comprises:
in a case where a change in the display area of the player is detected based on the second operating system, transmitting changed display area information to the first operating system based on the second operating system; and
outputting, based on the first operating system, the decoded image data in a display area indicated by the changed display area information.

3. The video playback method of claim 1, wherein after outputting, based on the first operating system, the decoded image data in the display area indicated by the display area information and the decoded audio data through the speaker, the method further comprises:
returning playback state information of the video file to the second operating system based on the first operating system; and
displaying the playback state information in the player of the second operating system.

4. The video playback method of claim 1, wherein after outputting, based on the first operating system, the decoded image data in the display area indicated by the display area information and the decoded audio data through the speaker, the method further comprises:
in a case where a playback control instruction other than the playback starting instruction is received based on the player, transmitting, based on the second operating system, the received playback control instruction to the first operating system to respond.

5. The video playback method of any one of claims 1 to 4, wherein the first operating system comprises a first multimedia system, the second operating system comprises a second multimedia system, and before in the case where the player of the second operating system receives the playback starting instruction of the video file, transmitting the playback starting instruction and the display area information of the player to the first operating system based on the second operating system, the method further comprises:
establishing a multimedia system proxy server based on the first multimedia system and establishing a multimedia system proxy client based on the second multimedia system; and
establishing a communication connection between the multimedia system proxy server and the multimedia system proxy client so that data transmission between the first operating system and the second operating system is performed based on the communication connection.

6. The video playback method of claim 5, wherein the first operating system further comprises an audio hardware acceleration system and a video hardware acceleration system, and performing, based on the first operating system, the audio and video hardware decoding on the video file indicated by the playback starting instruction comprises:
inputting an audio part of the video file into the audio hardware acceleration system based on the first multimedia system to obtain audio data decoded and returned by the audio hardware acceleration system; and
inputting a video part of the video file into the video hardware acceleration system based on the first multimedia system to obtain image data decoded and returned by the video hardware acceleration system.

7. A video playback device, which is applicable to a terminal device configured to operate a first operating system having an audio and video hardware acceleration function and a second operating system that does not have the audio and video hardware acceleration function, the device comprising:
a transmission module, configured to, in a case where a player of the second operating system receives a playback starting instruction of a video file, transmit the playback starting instruction and display area information of the player to the first operating system based on the second operating system;
a decoding module, configured to, in a case where the first operating system receives the playback starting instruction, perform, based on the first operating system, audio and video hardware decoding on the video file indicated by the playback starting instruction; and
a playback module, which is configured to output, based on the first operating system, decoded image data in a display area indicated by the display area information and decoded audio data through a speaker.

8. The video playback device of claim 7, wherein
the first operating system comprises a first multimedia system, and the second operating system comprises a second multimedia system, and
the transmission module is further configured to establish a multimedia system proxy server based on the first multimedia system and establish a multimedia system proxy client based on the second multimedia system; and
the transmission module is further configured to establish a communication connection between the multimedia system proxy server and the multimedia system proxy client so that data transmission between the first operating system and the second operating system is performed based on the communication connection.

9. A terminal device, comprising:
a memory storing a first operating system, a second operating system and a video playback program, wherein the first operating system has an audio and video hardware acceleration function and the second operating system does not have the audio and video hardware acceleration function; and
a processor configured to operate the first operating system and the second operating system, and configured to execute the video playback program to perform the following steps:
in a case where a player of the second operating system receives a playback starting instruction of a video file, transmitting the playback starting instruction and display area information of the player to the first operating system based on the second operating system;
in a case where the first operating system receives the playback starting instruction, performing, based on the first operating system, audio and video hardware decoding on the video file indicated by the playback starting instruction; and
outputting, based on the first operating system, decoded image data in a display area indicated by the display area information and decoded audio data through a speaker.

10. A computer readable storage medium, which is applicable to a terminal device configured to operate a first operating system having an audio and video hardware acceleration function and a second operating system that does not have the audio and video hardware acceleration function, wherein the computer readable storage medium stores a video playback program which, when executed by a processor, performs the following steps:
in a case where a player of the second operating system receives a playback starting instruction of a video file, transmitting the playback starting instruction and display area information of the player to the first operating system based on the second operating system;
in a case where the first operating system receives the playback starting instruction, performing, based on the first operating system, audio and video hardware decoding on the video file indicated by the playback starting instruction; and
outputting, based on the first operating system, decoded image data in a display area indicated by the display area information and decoded audio data through a speaker.
